# EUROPEAN PATENT APPLICATION

(11) **EP 2 026 018 A1**
(43) Date of publication of application: **18.02.2009**
(21) Application number: 07744957.7
(22) Date of filing: 08.06.2007
(51) Int. Cl.: F25B 11/02

(54) **REFRIGERATION DEVICE**

(30) Priority: 08.06.2006 JP 2006159298
(71) Applicant: DAIKIN INDUSTRIES, LTD., Osaka-shi, Osaka 566-8585 (JP)
(72) Inventor: SAKITANI, Katsumi, Sakai-shi, Osaka 591-8511 (JP); OKAMOTO, Masakazu, Sakai-shi, Osaka 591-8511 (JP); KUMAKURA, Eiji, Sakai-shi, Osaka 591-8511 (JP); OKAMOTO, Tetsuya, Sakai-shi, Osaka 591-8511 (JP)
(74) Representative: HOFFMANN EITLE
(86) International application number: PCT/JP2007/061641
(87) International publication number: WO 2007/142332

(57) **Abstract**

A refrigerating apparatus (**10**) includes a refrigerant circuit (**11**) in which a compressor (**20**), a radiator (**14**), an expander (**30**), and a cooler (**15**) are connected to each other in order through refrigerant pipes, in which a rotating shaft (**22**) of a motor is connected to a compression mechanism (**21**) included in the compressor (**20**) while a rotating shaft (**32**) of a generator (**33**) is connected to an expansion mechanism (**31**) included in the expander (**30**). The refrigerating apparatus (**10**) further includes an electric power input mechanism (**41, 43**) for allowing the generator (**33**) to function as a motor. This secures the operation of the expander (**30**) at a start of the apparatus to secure the start of a system, thereby attaining reliable control of the start-up performance at the start.

## Description

### Technical Field

The present invention relates to a refrigerating apparatus of a type including an expander for motive power recovery as an expansion mechanism of a refrigeration cycle, which is connected to a generator and is not mechanically connected to a compressor through a shaft.

### Background Art

There have been conventionally known refrigerating apparatuses performing a refrigeration cycle by circulating refrigerant in a refrigerant circuit, which are widely used for the purpose of air conditioning and the like. For example, Patent Document 1 discloses a refrigerating apparatus including a compressor for compressing refrigerant and an expander for motive power recovery for expanding the refrigerant. In a refrigerating apparatus shown in FIG. **1** in Patent Document 1, the expander is connected to the compressor mechanically through a single shaft so that the motive power obtained in the expander is utilized for driving the compressor.

Referring to a refrigerating apparatus shown in FIG. **6** in Patent Document 1, the compressor and the expander are not mechanically connected to each other, and a motor and a generator are connected to the compressor and the expander, respectively, so that the compressor and the expander are independent of each other. In this refrigerating apparatus, the compressor is driven by the motor to compress the refrigerant while the generator is driven by the expander to generate electric power.
Patent Document 1; Japanese Unexamined Patent Application Publication 2000-241033

### Summary of the Invention

### Problems that the Invention is to Solve

In the case where the compressor and the expander are connected to each other through the single shaft, the expander starts operating, at the same time as a start of the apparatus, by the driving power of the motor connected to the compressor. While on the other hand, in the case where the compressor and the expander are not connected to each other through the shaft, when the compressor is operated by the motor at a start of the apparatus, the starting torque for the expander may be short, though the pressure difference is caused before and after the expander, to lead to failure in operation of the expander. In other words, a system in which the compressor and the expander are mechanically independent of each other cannot cause a normal start of the apparatus in some cases to involve a problem that the start-up performance at a start is controlled unreliably.

The present invention has been made in view of the foregoing and has its object of attaining reliable control of the start-up performance, in a refrigerating apparatus in which an expander is not mechanically connected to a compressor through a shaft and is connected to a generator, by securing a start of a system by securely operating the expander at a start of the apparatus.

### Means for Solving the Problems

A first aspect of the present invention premises a refrigerating apparatus (**10**) including: a refrigerant circuit (**11**) in which a compressor (**20**), a radiator (**14**), an expander (**30**), and a cooler (**15**) are connected to each other in order through refrigerant pipes, in which a rotating shaft (**22**) of a motor (**23**) is connected to a compression mechanism (**21**), which the compressor (**20**) includes, while a rotating shaft (**32**) of a generator (**33**) is connected to an expansion mechanism (**31**), which the expander (**30**) includes.

The refrigerating apparatus (**10**) further includes an electric power input mechanism (**41, 43**) for allowing the generator (**33**) to function as a motor (**23**).

In the first aspect, provision of the electric power input mechanism (**41, 43**) allows the generator (**33**) to function as the motor (**23**), for example, at a start. When the generator (**33**) functions as the motor (**23**) at a start, the expander rotates by itself regardless of the pressure difference before and behind the expander (**30**). Hence, the apparatus starts normally.

Referring to a second aspect of the present invention, in the first aspect, there is provided a control mechanism (**45**) for allowing the electric power input mechanism (**41, 43**) for the generator (**33**) to operate at a start of the expander (**30**).

In the second aspect, the control mechanism (**45**) is provided for using the generator (**33**) as the motor (**23**) at a start of the expander (**30**) to attain more secured operation of the expander (**30**) at the start. After the start, the generator (**33**) generates the electric power by rotation of the expander (**30**) to recover the motive power.

Referring to a third aspect of the present invention, in the first or second aspect, the refrigerant circuit (**11**) uses carbon dioxide as a refrigerant.

The third aspect refers to the refrigerating apparatus (**10**) which recovers the motive power with the use of the expander (**30**) in the refrigerant circuit (**11**) using carbon dioxide as a refrigerant, wherein the generator (**33**) connected to the expander (**30**) is used as the motor (**23**) at a start for start-up control and is used as the generator (**33**) in normal operation for motive power recovery.

### Effects of the Invention

According to the present invention, the electric power input mechanism (**41, 43**) allows the generator (**33**) to function as the motor (**23**). For example, when the generator (**33**) functions as the motor (**23**) at a start, the expander (**30**) rotates by itself regardless of the pressure difference before and behind the expander (**30**) to cause the apparatus to start normally, thereby attaining reliable control of the start-up performance at the start.

In the second aspect of the present invention, the control mechanism (**45**) is provided for allowing the electric power input mechanism (**41, 43**) for the generator (**33**) to operate at a start of the expander (**30**). This attains more secured operation of the expander (**30**) at a start. Hence, the start-up performance can be controlled more reliably at a start.

Referring to the third aspect of the present invention, in the refrigerating apparatus (**10**) which recovers the motive power by using the expander (**30**) in the refrigerant circuit (**11**) using carbon dioxide as a refrigerant, the start-up control can be performed by using the generator (**33**) connected to the expander (**30**) as the motor (**23**) at a start while the motive power can be recovered by using the generator (**33**) as the generator (**33**) in normal driving operation.

### Brief Description of the Drawings

[FIG. 1] FIG. 1 is a refrigerant circuit diagram of a refrigerating apparatus in accordance with an embodiment of the present invention.
[FIG. 2] FIG. 2 is a block diagram showing electric control on a motor of a compressor and a generator of an expander.

### Index of Reference Numerals

- 10: refrigerating apparatus
- 11: refrigerant circuit
- 14: radiator
- 15: cooler
- 20: compressor
- 21: compression mechanism
- 22: drive shaft (rotating shaft)
- 23: motor
- 30: expander
- 31: expansion mechanism
- 32: output shaft (rotating shaft)
- 33: generator
- 41: first converter (electric power input mechanism)
- 42: second converter
- 43: third converter (electric power input mechanism)
- 45: controller (control mechanism)

### Best Mode for Carrying out the Invention

An embodiment of the present invention will be described below with reference to the accompanying drawings.

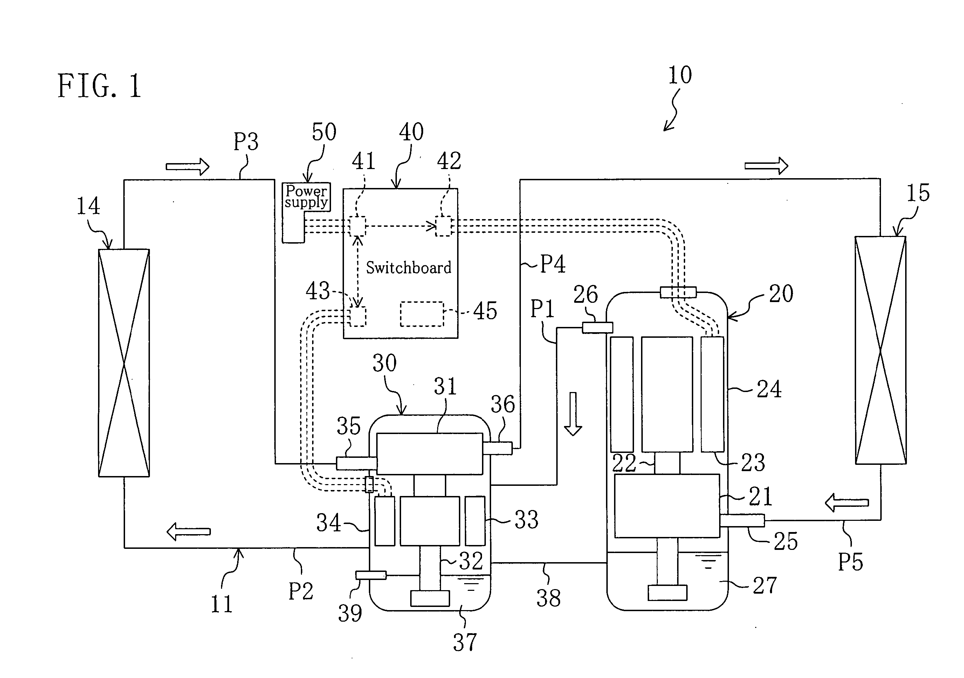

As shown in FIG. 1, a refrigerating apparatus (**10**) in accordance with the present embodiment includes a refrigerant circuit (**11**). In the refrigerant circuit (**11**), a compressor (**20**), a radiator (**14**), an expander (**30**), and a cooler (**15**) are connected to each other in order through refrigerant pipes. Carbon dioxide (CO₂) as a refrigerant is filled in the refrigerant circuit (**11**). The compressor (**20**) and the expander (**30**) are provided at substantially the same level in height.

The compressor (**20**) is a hermetic compressor of generally-called high-pressure dome type. The compressor (**20**) includes a compressor casing (**24**) formed in a vertically cylindrical shape. Inside the compressor casing (**24**), there are housed a compression mechanism (**21**), a motor (**23**), and a drive shaft (rotating shaft) (**22**). The compression mechanism (**21**) is a generally-called rotary positive displacement fluid machinery. Inside the compressor casing (**24**), the generator (**23**) is arranged above the compression mechanism (**21**). The drive shaft (**22**) is arranged so as to extend vertically to connect the compression mechanism (**21**) and the motor (**23**).

The compressor casing (**24**) is provided with a suction pipe (**25**) and a discharge pipe (**26**). The suction pipe (**25**) passes through the vicinity of the lower end of the body of the compressor casing (**24**) and has a terminal end directly connected to the compression mechanism (**21**). The discharge pipe (**26**) passes through the vicinity of the upper end of the compressor casing (**24**) and has a start end open to a space above the motor (**23**) in the compressor casing (**24**). The compression mechanism (**21**) compresses the refrigerant sucked through the suction pipe (**25**) and discharges it to the compressor casing (**24**).

In the bottom of the compressor casing (**24**), refrigerator oil as a lubricant oil is reserved. Namely, an oil reservoir (**27**) is formed in the compressor casing (**24**).

The drive shaft (**22**) includes an oil supply mechanism for supplying the refrigerator oil from the oil reservoir (**27**) to the compression mechanism (**21**). Inside the drive shaft (**22**), an oil supply path extending in the axial direction thereof is formed, though no shown. The oil supply path opens at the lower end of the drive shaft (**22**) and serves as a generally-called centrifugal pump. The lower end part of the drive shaft (**22**) is dipped in the oil reservoir (**27**). When the drive shaft (**22**) is rotated, the refrigerator oil is sucked from the oil reservoir (**27**) to the oil supply path by the operation of the centrifugal pump. The refrigerator oil sucked in the oil supply path is supplied to the compression mechanism (**21**) to be utilized for lubrication of the compression mechanism (**21**).

The expander (**30**) includes an expander casing (**34**) formed in a vertically cylindrical shape. Inside the expander casing (**34**), there are housed an expansion mechanism (**31**), a generator (**33**), and an output shaft (rotating shaft) (**32**). The expansion mechanism (**31**) is a generally-called rotary positive displacement fluid machinery. Inside the compressor casing (**34**), the generator (**33**) is arranged below the expansion mechanism (**31**). The output shaft (**32**) is arranged so as to extend vertically to connect the expansion mechanism (**31**) and the generator (**33**).

The expander casing (**34**) is provided with an inflow pipe (**35**) and an outflow pipe (**36**). The inflow pipe (**35**) and the outflow pipe (**36**) pass through parts in the vicinity of the upper end of the body of the expander casing (**34**). The inflow pipe (**35**) has a terminal end directly connected to the expansion mechanism (**31**). The outflow pipe (**36**) has a start end directly connected to the expansion mechanism (**31**). The expansion mechanism (**31**) expands the refrigerant flowing therein through the inflow pipe (**35**) and sends out the expanded refrigerant to the outflow pipe (**36**). In other words, the refrigerant passing through the expander (**30**) passes only through the expansion mechanism (**31**) without flowing into the internal space of the expander casing (**34**).

In the bottom of the expander casing (**34**), refrigerator oil as a lubricant oil is reserved. Namely, an oil reservoir (**37**) is formed in the expander casing (**34**).

The output shaft (**32**) includes an oil supply mechanism for supplying the refrigerator oil from the oil reservoir (**37**) to the expansion mechanism (**31**). Inside the output shaft (**32**), an oil supply path extending in the axial direction thereof is formed, though no shown. The oil supply path opens at the lower end of the output shaft (**32**) and serves as a generally-called centrifugal pump. The lower end part of the output shaft (**32**) is dipped in the oil reservoir (**37**). When the output shaft (**32**) is rotated, the refrigerator oil is sucked from the oil reservoir (**37**) to the oil supply path by the operation of the centrifugal pump. The refrigerator oil sucked in the oil supply path is supplied to the expansion mechanism (**31**) to be utilized for lubrication of the expansion mechanism (**31**).

The construction of the refrigerant circuit (**11**) will be described next. One end of a first high-pressure pipe (**P1**) is connected to the discharge pipe (**26**) of the compressor (**20**) while the other end thereof is connected to a part of the expander casing (**34**) which is located above the generator (**33**). One end of a second high-pressure pipe (**P2**) is connected to a part of the expander casing (**34**) which is located below the generator (**33**) while the other end thereof is connected to one end of the radiator (**14**).

To the other end of the radiator (**14**), one end of a third high-pressure pipe (**P3**) is connected, of which the other end is connected to the inflow pipe (**35**) of the expander (**30**). One end of a first low-pressure pipe (**P4**) is connected to the outflow pipe (**36**) of the expander (**30**) while the other end thereof is connected to one end of the cooler (**15**). The other end of the cooler (**15**) is connected to one end of a second low-pressure pipe (**P5**), of which the other end is connected to the suction pipe (**25**) of the compressor (**20**).

The radiator (**14**) is an air heat exchanger (for example, an outdoor heat exchanger) for heat exchange between the refrigerant and first air flow (for example, outdoor air). The cooler (**15**) is an air heat exchanger (for example, an indoor heat exchanger) for heat exchange between the refrigerant and second air flow (for example, indoor air).

Between the compressor casing (**24**) and the expander casing (**34**), an oil equalizing pipe (**38**) is provided for connecting the oil reservoir (**27**) in the compressor casing (**24**) and the oil reservoir (**37**) in the expander casing (**34**). The expander (**30**) is provided with an oil level sensor (**39**).

The refrigerating apparatus (**10**) includes a switchboard (**40**). The switchboard (**40**) is connected to an external alternating-current power supply (**50**), the motor (**23**) of the compressor (**20**), and the generator (**33**) of the expander (**30**). The switchboard (**40**) has a function as an electric power input mechanism (**41, 43**) for allowing the generator (**33**) to serve as a motor. The switchboard (**40**) includes a controller (control mechanism) (**45**) for allowing the electric power input mechanism (**41, 43**) for the generator (**33**) to operate at a start of the compressor (**20**).

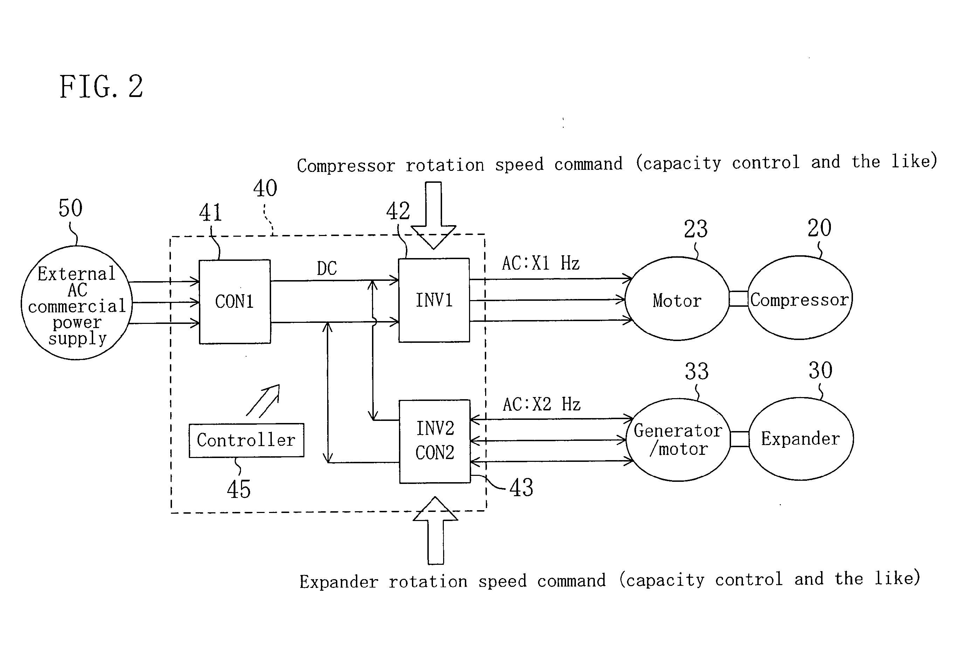

A structure of the switchboard (**40**) will be described with reference to the block diagram of FIG. 2. The switchboard (**40**) includes a first converter (**41**), a second converter (**42**), and a third converter (**43**). The first converter (**41**) has a function of an A-D converter (CON1) for converting an alternating current to a direct current. The second converter (**42**) has a function of an inverter (INV1) for converting a direct current to a frequency-controlled alternating current. The third converter (**43**) has both functions of an A-D converter (CON2) and an inverter (INV2).

The external alternating-current power supply (**50**) is connected so as to supply an alternating current to the first converter (**41**). The first converter (**41**) is connected so as to supply a direct current to the second converter (**42**). The second converter (**42**) is connected so as to supply a frequency-controlled alternating current to the motor (**23**) of the compressor (**20**). Whereby, the rotation speed of the motor (**23**) is controlled to adjust the operation capacity of the compression mechanism (**20**).

To the first converter (**41**), the third converter (**43**) is connected in parallel to the second converter (**42**). The third converter (**43**) is electrically connected to the generator (**33**) of the expander (**30**). In normal operation, the alternating current generated in the generator (**33**) is converted to a direct current through the A-D converter (CONT2) of the third converter (**43**) to be supplied to the second converter (**42**) together with the direct current from the first converter (**41**). The direct current from the third converter (**43**) is converted together with the direct current from the external alternating-current power supply (**50**), which has been processed in the first converter (**41**), to an alternating current in the inverter (INV1) of the second converter (**42**) and is then supplied to the motor (**23**) of the compressor (**20**).

At a start of the apparatus (**10**), the alternating current from the external alternating-current power supply (**50**) is supplied to the motor (**23**) of the compressor (**20**) and also to the generator (**33**) of the expander (**30**). At that time point, the direct current converted by the A-D converter (CON1) of the first converter (**41**) is converted to the frequency-controlled alternating current in both the inverter (INV1) of the second converter (**42**) and the inverter (INV2) of the third converter (**43**). Then, the thus converted alternating currents are supplied to the motor (**23**) of the compressor (**20**) and the generator (**33**) of the expander (**30**).

Wherein, a rotation speed command of the compressor (**20**) is input to the second converter (**42**) while a rotation speed command of the expander (**30**) is input to the third converter (**43**). On the basis of the thus input commands, the frequencies of the alternating currents to be supplied to the motor (**23**) and the generator (**33**) are controlled.

### - Driving operation -

An operation of the refrigerating apparatus (**10**) will be described next.

During the operation of the refrigerating apparatus (**10**), a vapor compression refrigeration cycle is performed by circulating the refrigerant in the refrigerant circuit (**11**). The refrigeration cycle performed in the refrigerant circuit (**11**) is so set that the high pressure thereof is higher than the critical pressure of carbon dioxide, the refrigerant.

In the compressor (**20**), the motor (**23**) rotates and drives the compression mechanism (**21**). The refrigerant sucked through the suction pipe (**25**) is compressed in the compression mechanism (**21**) and is then discharged to the compressor casing (**24**). The high-pressure refrigerant in the compressor casing (**24**) is discharged from the compressor (**20**) through the discharge pipe (**26**). The refrigerant discharged from the compressor (**20**) fills the expansion casing (**24**) and is then sent to the radiator (**14**) to radiate heat to the first air flow (outdoor air). The high-pressure refrigerant heat-radiated in the radiator (**14**) flows into the expansion mechanism (**31**) of the expander (**30**).

In the expander (**30**), the high-pressure refrigerant flowing in the expansion mechanism (**31**) through the inflow pipe (**35**) is expanded to rotate and drive the generator (**33**). The electric power generated in the generator (**33**) is supplied to the motor (**23**) of the compressor (**20**). The refrigerant expanded in the expansion mechanism (**31**) is sent out from the expander (**30**) through the outflow pipe (**36**). The refrigerant sent out from the expander (**30**) is sent to the cooler (**15**). In the cooler (**15**), the refrigerant flowing therein absorbs the heat from the second air flow (indoor air) to be evaporated, thereby cooling the second air flow. The low-pressure refrigerant flowing out from the cooler (**15**) flows into the suction pipe (**25**) of the compressor (**20**).

During this normal operation, the alternating current from the external alternating-current power supply (**50**) is frequency-converted through the first converter (**41**) and the second converter (**42**) to be supplied to the motor (**23**) of the compressor (**20**), and the alternating current generated in the generator (**33**) of the expander (**30**) is frequency-converted through the second converter (**42**) to be supplied to the motor (**23**) of the compressor (**20**). Accordingly, the amount of power to be supplied from the external alternating-current power supply (**50**) can be suppressed.

### - Operation at start -

At a start, the controller (**45**) outputs a command for allowing the generator (**33**) connected to the expander (**30**) to function as the motor (**23**). Accordingly, the alternating current of the external alternating-current power supply (**50**) is frequency-converted through the first converter (**41**) and the second converter (**42**) to be supplied to the motor (**23**) of the compressor (**20**) while being also frequency-converted through the first converter (**41**) and the third converter (**43**) to be supplied also to the generator (**33**) of the expander (**30**) which serves as a motor at present.

Hence, the expander (**30**) can be started securely at the same time when the compressor (**20**) is started.

### - Effects of Embodiment -

According to the present embodiment, the electric power input mechanism (**41, 43**) allows the generator (**33**) of the expander (**30**) to function as a motor. When the generator (**33**) functions as a motor at a start, the expander (**30**) rotates by itself regardless of the pressure difference before and behind the expander (**30**) to start the apparatus (**10**) normally, thereby attaining reliable control of the start-up performance at the start.

### <Other Embodiments>

The above embodiment may have any of the following structure.

For example, the refrigerant is circulated in only one direction in the refrigerant circuit in the above embodiment, but the present invention may be applied to a refrigerant circuit in which the refrigerant circulating direction is reversible. The above embodiment presents a basic circuit configuration of the refrigerant circuit, which may include various kinds of additional apparatuses in actual product design.

The above embodiments are merely essential examples and are therefore not intended to limit the scopes of the present invention, applicable objects, and uses.

### Industrial Applicability

As described above, the present invention is useful in a refrigerating apparatus of a type including an expander for motive power recovery as an expansion mechanism of a refrigeration cycle, which is connected to a generator and is not mechanically connected to a compressor through a shaft.

## Claims

1. A refrigerating apparatus comprising: a refrigerant circuit (**11**) in which a compressor (**20**), a radiator (**14**), an expander (**30**), and a cooler (**15**) are connected to each other in order through refrigerant pipes, in which a rotating shaft (**22**) of a motor (**23**) is connected to a compression mechanism (**21**), which the compressor (**20**) includes, while a rotating shaft (**32**) of a generator (**33**) is connected to an expansion mechanism (**31**), which the expander (**30**) includes, the refrigerating apparatus further comprising:
an electric power input mechanism (**41, 43**) for allowing the generator (**33**) to function as a motor (**23**).

2. The refrigerating apparatus of claim 1, further comprising:
a control mechanism (**45**) for allowing the electric power input mechanism (**41, 43**) for the generator (**33**) to operate at a start of the expander (**30**).

3. The refrigerating apparatus of claim 1, wherein
the refrigerant circuit (**11**) uses carbon dioxide as a refrigerant.
